# EUROPEAN PATENT APPLICATION

(11) **EP 1 821 300 A2**
(43) Date of publication of application: **22.08.2007**
(21) Application number: 07102277.6
(22) Date of filing: 13.02.2007
(51) Int. Cl.: G11B 7/24, G11B 7/242, G11B 7/26

(54) **High density optical recording media and a method for preparing the same**

(30) Priority: 20.02.2006 IN DE04622006
(71) Applicant: Moser Baer India Ltd., 1110020 New Delhi (IN)
(72) Inventor: Palanlsamy, R., Greater Noida, Uttar Pradesh 201306 (IN); Achar, P.C., Greater Noida, Uttar Pradesh 201306 (IN); Agarwal, Nikhil, Greater Noida, Uttar Pradesh 201306 (IN); Verma, Amltabh, Greater Noida, Uttar Pradesh 201306 (IN); Nyati, Griraj, Greater Noida, Uttar Pradesh 201301 (IN)
(74) Representative: van Loon, C.J.J.

(57) **Abstract**

A phase-change recording material of metal-ceramic combination consisting of 80-98 at% 70Sb-(5-15)In-(15-25)Sn alloy and 2-20 at% 80ZnS-20SiO₂ enabling 2T mark formation and lower jitter values for write-once-read-many times (WORM) optical recording media for high density L2H recording comprising
(a) 1.1 mm pre-grooved substrate
(b) 100-200nm reflective layer
(c) 5-20 nm First dielectric layer
(d) 50-80 nm Second dielectric layer
(e) 6-18nm phase-change material sputtered from a metal-ceramic target comprising of 80-98 at% 70Sb-(5-15In)-(15-25)Sn alloy and 2-20 at% 80ZnS-20SiO₂ ceramic to achieve smaller mark formation in high density optical recording and
(f) 80-120 micron a polycarbonate cover layer.

## Description

### Field of the Invention

The present invention relates to an optical recording medium and more particularly to a recording medium that is adaptive for recording information at high density. Also, the present invention relates to a method for manufacturing high-density optical recording disk, which includes phase change recording layer as a primary component on which data can be recorded using a laser beam having a wavelength of 405 nm. The present invention is also directed to recording and apparatus that is suitable for recording and reproducing high-density optical recording medium.

### Description of the Related Art.

Optical recording is being increasingly used in recent years to publish, distribute, store, and retrieve information. This is accomplished by focusing a laser beam to write and/or read information on an optical recording element, usually in the form of a spinning disk. In the Read-Only Memory (ROM) format, the information is pre-recorded at the factory in the form of encoded small features on the element and the laser beam is used to read back the information. In the writeable formats, the laser beam is used to create encoded marks through a variety of physical recording mechanisms. This permits users to record their own data on the disk. Some physical mechanisms of recording are reversible. The recorded marks can be erased and remade repeatedly. Disks that utilize these mechanisms are called erasable or rewriteable disks. Some of these physical mechanisms are irreversible, i.e. once the marks are made they cannot be reversed or altered without leaving a clearly identifiable trace that can be detected. Disks that utilize these mechanisms are called WORM (Write-Once-Read-Many times) disks. Each of these formats is suitable for certain practical applications.

The popularity of compact disk recordable (CD-R) in recent years, which is a WORM disk, suggests the strong demand for WORM disks. WORM disks are suitable for many applications. In some of these applications, the data need to be stored in such a form that any modification to the content is not possible without leaving an easily detectable trace. For example, attempts to record over a previously recorded area may result in an increase in the read-back data jitter. An increase in data jitter of 50% is easily detectable and can be used to identify a recording element that has been tampered.

Many physical mechanisms have been used for WORM recording. The first practical WORM optical recording element utilized ablative recording where the pulsed laser beam is used to create physical pits in the recording layer. This mechanism requires the recording elements to be in an air-sandwiched structure to leave the surface of the recording layer free from any physical obstruction during the pit formation process. This requirement not only increases the cost but also introduces many undesirable properties that severely limit the usefulness of the recording element. Another mechanism is to use the laser beam to cause the fusing or chemical interaction of several layers into a different layer. This mechanism suffers from the requirement of relatively high laser power.

Yet another approach is to use organic dye as the recording layer. Although used successfully in CD-R disks, this mechanism suffers from its strong wavelength dependence. The optical head used in the DVD devices operating at 650 nm, for example, is not able to read the CD-R disks designed to work at the CD wavelength of 780 nm. Furthermore, a dye-based recording element tends to require more laser power for recording, and may have difficulties supporting recording at high speeds.

A more desirable approach is based on amorphous-crystalline phase-change mechanism. Phase-change material is the basis for the rewriteable DVD disks that have been introduced as DVD-RAM and DVD-RW products in the market. The phase-change recording layer has the advantages of high signal output and response to 405 nm wavelength. Though the refractive index and the extinction coefficient decrease at shorter wavelength, the difference of the value between amorphous state and crystalline state remains large. The high difference between the reflectivity of amorphous and crystalline phase results in high output signal. By properly selecting a different composition, the phase-change materials can be made WORM as well. A phase-change based DVD-WORM disk will have the best similarity in characteristics with the rewriteable DVD disks, and it can share the same manufacturing equipment with the re-writable disks. Both of these are highly desirable. Since the WORM feature requires disks that cannot be re-written, the phase-change materials for WORM needs to be different from those conventionally used for rewriteable disks. Commonly assigned U.S. Pat. Nos. 4,904,577; 4,798,785; 4,960,680; 4,774,170; 4,795,695; 5,077,181 and 5,271,978, teach various alloys that can be used for write-once phase-change recording. When these alloys are used to manufacture a WORM optical recording element, the recording laser beam is used to change the atomic structure of the recording phase-change material from amorphous state to crystalline state. The unique feature that distinguishes these alloys from the conventional rewriteable phase-change materials is their high crystallization rate at temperatures just below the melting point. Once the material is crystallized it is practically impossible to reverse the materials back to the amorphous phase. Optical elements based on these alloys therefore possess true-WORM properties. Once the data are recorded on these elements, they cannot be altered without leaving a detectable trace. Optical recording elements based on these alloys, especially the Antimony-Indium-Tin alloys have further advantages over other WORM optical recording elements. They are stable and have high recording sensitivity. However, recording elements based on these alloys also suffer from some shortcomings. One of the main shortcomings is the recent discovery that the recording performance of these elements deteriorates as the recording density is increased.

With the transition into the digital age, more and more data are generated everyday, and the need to store these ever increasing amounts of data keeps on increasing. Therefore, there exists a strong need to keep increasing the density of the storage devices. In optical recording elements, this increase in density is achieved mainly through a decrease in the feature size used for storing information. To accomplish this decrease in feature size, the laser wavelength is being decreased and the numerical aperture of the focusing lenses is being increased to reduce the size of the read/write laser spots. However, the capability of the storage medium to support the small feature size is not guaranteed.

An example of an optical recording medium having high recording capacity includes DVD, which includes a semiconductor laser for generating a red laser beam with a wavelength of 650 nm and an objective lens with a numerical aperture of 0.6. DVD is suitable for recording information up to only 4.7 Gigabytes.

Various attempts have been made to enlarge the recording density of an optical medium as described in paper entitled "A rewriteable optical disk system over 10 GB of capacity"(Optical data Storage '98 Conference edition pp 131-133". This paper suggests enlarging the recording capacity of an optical medium by increasing the numerical aperture of the objective lens.

In another paper entitled "The path from DVD(red) to DVD(blue)" Joint Moris/ISOM '97 Conference proceeding pp 52 to 53) discloses a scheme of carrying out a dynamics servoin accordance with a radial tilt angle to correct aberration and to raise the recording density.

The recommended laser wavelength and numerical aperture for Blue-ray disc are 405 nm and 0.85, respectively. The track pitch for the blu-ray disc is reduced to 0.32 micro meter and the smallest mark size (2T) is 0.16 micro meter. In the ablative type media, frequently there is a rim around the ablative marks that physically prevents small features from being made. In the Sb-In-Sn phase-change alloys mentioned above, the noise increases when the recorded crystalline marks become smaller. The mechanism for this noise increase is not well understood. The mark formation in this recording material is hampered by arbitrary delays and decreased mark, especially the 2T marks, suggesting a low nucleation-site density in these alloy films. The low nucleation density has not presented a problem for lower density recording. When the recording density increases, however, the marks become smaller and the probability of proper nucleation during the irradiation time of the writing laser becomes smaller. Consequently, the recorded marks may become less uniform and the read back jitter increases. Doping oxygen (commonly-assigned U.S. Pat. No. 5,271,978), water, nitrogen, or methane (commonly-assigned U.S. Pat. Nos. 5,312,664 and 5,234,803) to Sb-In-Sn alloys improves the situation somewhat, but the small mark recording is still a problem.

Another shortcoming of the Sb-In-Sn alloy is the high optical density of the alloys. For certain applications, it is desirable to construct a multi-layer structure and utilize optical interference to enhance recording performance or to change the polarity of the recorded signals. For example, one can use a three-layer structure comprising a phase-change recording layer, a dielectric layer, and a reflective layer; or a four-layer structure with an additional dielectric layer on the other side of the phase-change recording layer. For the optical interference to work a substantial amount of light has to transmit through the phase-change layer and, therefore, the thickness of the phase-change layer has to be small. The required thickness decreases with increasing optical density of the phase-change layer. The Sb-In-Sn alloys have high optical absorption, with the imaginary part of the optical constant, k, larger than 3.0 in the amorphous phase and it increases to even higher values when the material crystallizes. When a Sb-In-Sn alloy thin film is used as the recording layer for a three-layer or four-layer recording element, its thickness has to be so small that concern arises with respect to the film's chemical stability. For operating at 650 nm wavelength, for example, the thickness of the phase-change recording layer needs to be less than 10 nm. The thickness of the dielectric layer also depends on the optical density of the phase-change layer. The thickness increases as the optical density increases. Since the deposition rates for dielectric layers are smaller than those for alloys, the need for a relatively thick dielectric layer reduces the manufacturing throughput and increases product costs. The deposition process for dielectric layers are also hotter than that for alloys, long deposition time used for thick dielectric layers causes unwanted heating of the substrates. The high optical density of the Sb-In-Sn necessitates the use of thicker dielectric layer as well.

There are two types of recording conditions, namely, L2H and H2L. L2H refers to Low-to-High change, which essentially means transition of reflectivity from low to high upon laser irradiation. Similarly, H2L refers to reflectivity transition from high-to-low after laser shining.. In the normal stack, the grooves are formed on a polycarbonate substrate and dye layer is applied over the substrate. A reflective layer of silver is applied on the dye layer. However, the stacking sequence for the blue-ray disc is reversed to accommodate the radial and tangential tilt for lower laser wavelength and higher numerical aperture of lens system. Needless to say, the DVD has normal stack and H2L media has been found to work satisfactorily for it. While L2H dye-based media is being developed for blue laser discs, it suffers from the problem of high normalized push-pull, which is the tracking signal. This poses problem in drive design, as there is always cross talk between the radial position to the focusing error signal resulting in reliability of focusing and start up. The inorganic L2H media overcomes the said problem and is, therefore, being developed for high storage density discs using laser wavelength of 405 nm. As the storage capacity of optical media increases the mark size become smaller and smaller. While this is an advantage for fast growth rewritable materials, it can be a problem for write-once media, because the volume of material that is heated up and in which nucleation needs to take place reduces, increasing the difficulty of mark formation. Larger marks are formed due to the availability of more nuclei and smaller marks are difficult as there are only one or two nuclei. The choice of phase-change material was largely based on the ease of nucleation in high-speed recording. The Antimony, Tin and Indium alloy is doped with elements like Zinc, Sulphur, Silicon and Oxygen in an amount sufficient to improve the smaller mark formation during high density data recording in the BDR L2H media.

### Summary of the Invention

Accordingly, it is an object of the present invention to provide a high-density recording medium that is adaptive for recording and reproducing high-density recording information,

Another object of the present invention is to provide an improved, phase-change based recording element that can support higher recording densities.

Still another object of the present invention is to develop a write-once optical recording medium based on blue laser, which has a capability to write data at a maximum write speed of 10 m/s.

Yet another object of the present invention is to develop inorganic L2H media using laser wavelength of 405 nm and having the normalized push-pull signal meeting the book specifications.

To achieve the aforementioned objects the present invention provides a phase-change recording material of metal-ceramic combination consisting of 80-98 at% 70Sb-(5-15)In-(15-25)Sn alloy and 2-20 at% 80ZnS-20SiO₂ ceramic enabling 2T mark formation and lower jitter values

The present invention also provides a write-once-read-many times (WORM) optical recording media for high density L2H recording comprising
(a) 1.1 mm pre-grooved substrate
(b) - 100-200 nm reflective layer
(c) 5-20 nm first dielectric layer
(d) 40-80 nm second dielectric layer
(e) 6-18nm phase-change material sputtered from a metal-ceramic target comprising of 80-98 at% 70Sb-(5-15)In-(15 25)Sn alloy and 2-20 at% 80ZnS-20SiO₂ ceramic to achieve smaller mark formation in high density optical recording and
(f) 80-120 micron a hard coated polycarbonate cover layer

The present invention also includes a process for preparing a write-once-read-many times (WORM) optical recording media characterized by the step of changing the atomic structure of antimony-tin-indium alloy, doped with Zinc, Sulphur, Silicon, Oxygen recording phase- change material from amorphous state to crystalline state using blue laser of 405 nm wavelength. The said phase-change material in combination with dielectric layer, and reflectance layer is used to meet the requirements of high-density recording.

### Brief Description of the Drawings

These and other objects of the invention will be apparent from the following detailed description of the embodiments of the present invention with reference to the accompanying drawings, in which:
Fig1 is a schematic representation, in cross sectional view, of write once optical recording element that can be made in accordance with the present invention wherein the read / write laser beam is illuminated from the front surface of the element
Fig 2 illustrates the signal to noise ratio for the 8T marks.
Fig. 3 is the monotone pulse waveform for the 2T marks..
Fig. 4 is the monotone pulse waveform for the 8T marks.
Fig 5 is the eye pattern for the random marks.
Fig 6 is the measured push pull of unrecorded and recorded discs
Fig 7 is the reflection levels of BDR

### Detailed Explanation of the Invention

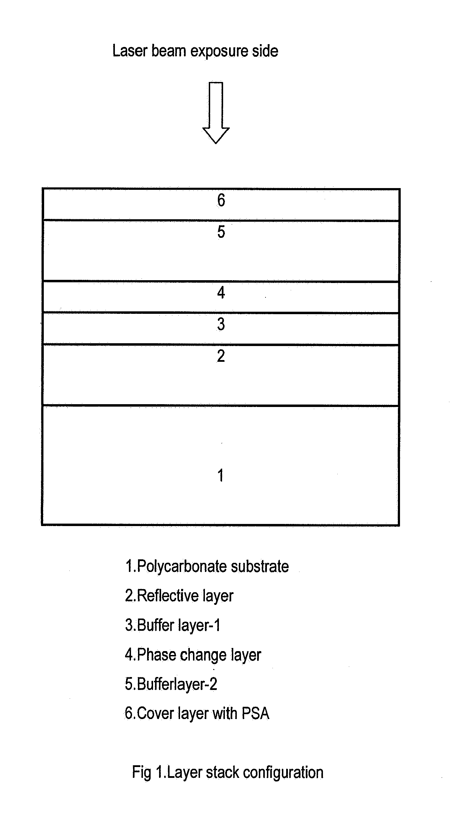

As shown in figure 1, WORM optical recording element made in accordance with the present invention comprises a substrate 1, a reflective layer 2, a dielectric layer 3, a phase-change recording layer 4, , , a second dielectric layer 5 and a hard coated protective cover layer 6. The substrate 1 is made of polycarbonate and a guide groove on the surface where the reflective layer, dielectric layers and phase-change recording layer are applied. The dielectric layers 3,5 are a mixture of ZnS and SiO₂. The reflective layer 2 can be a metallic layer, such as alloys of Al or Ag. The protective cover layer 6 is made up of 100 micro meter thick polycarbonate film coated with Pressure Sensitive Adhesive (PSA) on the bonding side and hard coating on the laser exposure side. The thickness of the phase-change recording layer 4 and the dielectric layers 3 and 5 are selected to optimize the recording performance and the recording contrast.

In another preferred embodiment a write-once-read-many times (WORM) optical recording media for high density L2H recording comprising
(a) 1.1 mm pre-grooved polycarbonate substrate
(b) Silver alloy reflective layer in the range of 100-200 nm
(c) First dielectric layer (ZnS-SiO₂) in the range of 5-20 nm
(d) Second dielectric layer (ZnS-SiO₂) in the range of 40-80 nm
(e) 6-18 nm phase-change material sputtered from a metal-ceramic target comprising of 80-98 at% 70Sb-(5-15)In-(15-25)Sn alloy and 2-20 at% 80ZnS-20SiO₂ ceramic to achieve smaller mark formation in high density optical recording
(f) A polycarbonate cover layer of 80-120 micro meter thickness

In the write-once-read-many times optical recording media using blue laser of 405 nm wavelength according to the present invention, the recorded marks have a higher reflectivity than the unrecorded region. The results indicate that by the addition of Zn, S, Si and O into the Sb₁₀₀₋ₘ₋ₙlnₘSnₙ alloys, improvements in recording performance can be achieved. The improvements include the capability to support higher density recording and 2T mark formation, which is difficult when conventional Sb.sub.100-m-n ln.sub.m Sn.sub.n alloys thin-film alone is used in the as-deposited amorphous form. When these thin-films are used for optical recording, the writing laser beam is used to transform the amorphous phase into crystalline marks having low nucieation-site density in these alloy films. The low nucleation density has not presented a problem for lower density recording. When the recording density increases, however, the marks become smaller and the probability of proper nucleation during the irradiation time of the writing laser becomes smaller. As a result, the recorded marks become less uniform and the read back jitter increases. This problem was overcome by preparing a metal-ceramic target of composition consisting of 80-98 at% 70Sb-(5-15)In-(15-25)Sn and 2-20 at% ZnS-SiO₂. Here the ZnS and SiO₂ were in the ratio of 4:1.

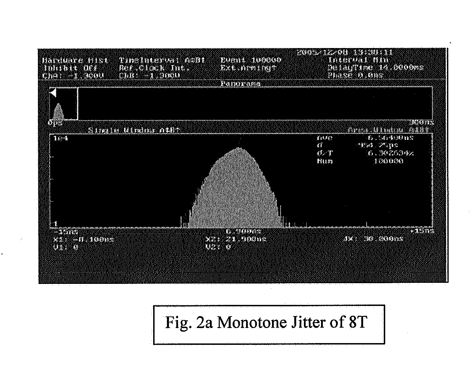

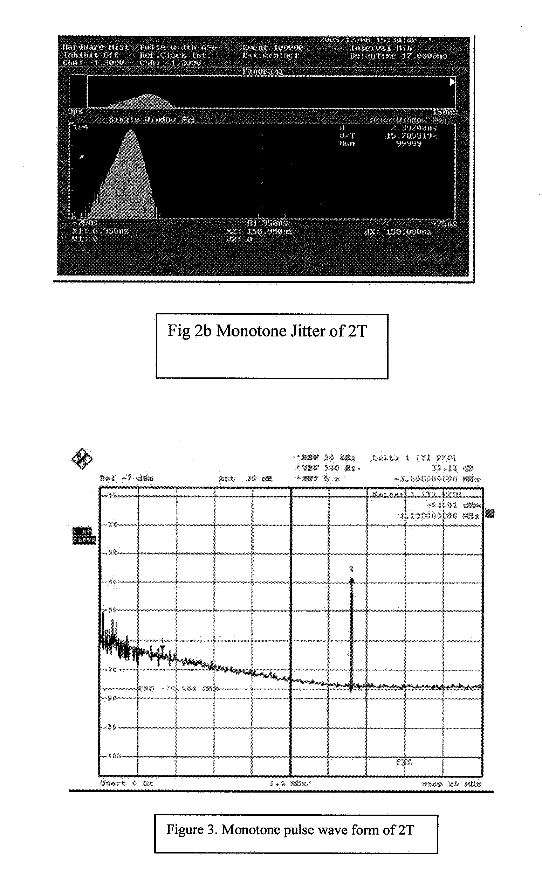

It is evident from figures 2a & 2b that the signal to noise ratio for the 8T marks is quite high and the 18 single tone jitter is close to the book specification and further improvement is possible by optimizing the write strategy.

Optical recording medium can be prepared by conventional thin film deposition techniques such as RF (Radio frequency) and DC Pulse sputtering system. Using these techniques, the reflecting, dielectric and phase change layers of desired thickness were coated. Adjusting sputtering power, time, argon gas flow rate, etc precisely controlled the thickness of the films. Before sputtering, the main chamber and the various process chambers were evacuated to better than 10⁻⁶ bar. Mass flow controller controlled the argon gas pressure inside the process chamber and it was maintained between 25-45 sccm and the sputtering pressure was between 10⁻¹ to 10⁻³ bar. Measuring the individual layers using ETA-RT equipment validated the thickness of the various layers deposited. The discs were visually inspected before loading into the cover layer bonding machine.

The cover layer of 100 micron thickness comprising a pressure- sensitive adhesive was bonded to the coated discs using cover layer bonding machine in vacuum atmosphere to avoid the air entrapment between the disc and the cover layer during bonding. The cover layer bonded disc was visually inspected and then tested in ODU unit for various parameters like reflectance, amplitude, jitter, write power, push-pull, modulation, random eye pattern etc.

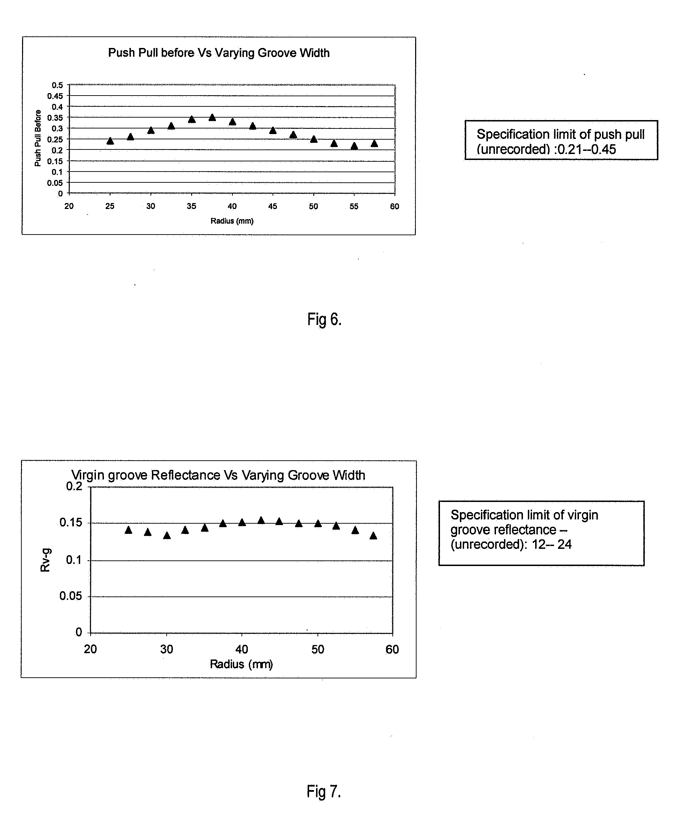

Measured push pull of unrecorded and recorded discs are ~0.36 and 0.32, respectively which is well with in the current book specification. T. Also, the reflection level of the present configuration was well above 12%, the lower limit of the unrecorded virgin groove reflection for BDR. (Figures 6 and 7)

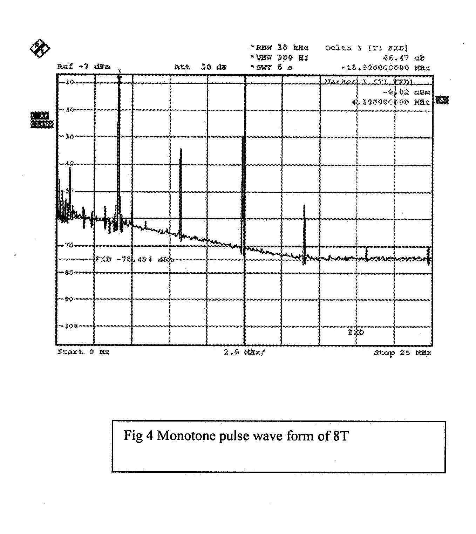

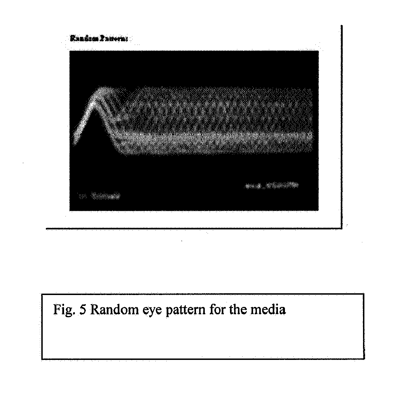

The phase- change-recording layer is such that reflectivity of regions exposed to laser is higher than that of unexposed regions. Laser beam is used to change the atomic structure of the recording phase- change material from amorphous state to crystalline state. Antimony-tin-indium alloy, doped with Zinc, Sulphur, Silicon, Oxygen as the phase-change material in combination with dielectric layer, and reflectance layer was used to meet the requirements of high density recording. The monotone pulse waveforms for the smallest (2T) and largest (8T) marks are given in figures 3 and 4 respectively. These values can be further improved by tweaking the write strategy parameters. The random eye pattern for the media is given in figure 5. These waveforms were generated on the ODU development tool equipped with blue laser optical head.

Although the present invention has been explained by the embodiments shown by the drawings described above, it should be understood to the ordinary skilled in the art that the invention is not limited to the embodiments, but rather various changes or modifications thereof are possible without departing from the spirit of the invention. Accordingly, the scope of the invention shall be determined only by the appended claims and their equivalents.

## Claims

1. A phase-change recording material of metal-ceramic combination consisting of 80-98 at% 70Sb-(5-15)In-(15-25)Sn alloy and 2-20 at% 80ZnS-20SiO₂ enabling 2T mark formation and lower jitter values.

2. A write-once-read-many times (WORM) optical recording media for high density L2H recording comprising
(a) 1.1 mm pre-grooved substrate
(b) 100-200nm reflective layer
(c) 5-20 nm First dielectric layer
(d) 50-80 nm Second dielectric layer
(e)6-18nm phase-change material sputtered from a metal-ceramic target comprising of 80-98 at% 70Sb-(5-151n)-(15-25)Sn alloy and 2-20 at% 80ZnS-20SiO₂ ceramic to achieve smaller mark formation in high density optical recording and
(f) 80-120 micron a polycarbonate cover layer

3. A media as claimed in claim 2 wherein, said substrate is a pregrooved polycarbonate substrate

4. A media as claimed in claim 2 wherein, said reflective layer is of a silver alloy.

5. A media as claimed in claim 2 wherein, said first and second dielectric layers is a ZnS-SiO₂

6. A media as claimed in claim 5 wherein the ratio of ZnS and SiO₂ in the first and second dielectric layers is 5:1.

7. A write-once-read-many times (WORM) optical recording media for high density L2H recording comprising
(a) 1.1 mm pre-grooved polycarbonate substrate
(b) Silver alloy reflective layer in the range of 100-200 nm
(c) First dielectric layer (ZnS-SiO₂) in the range of 5-20 nm
(d) Second dielectric layer (ZnS-SiO₂) in the range of 50-80 nm
(e) 6-18nm phase-change material sputtered from a metal-ceramic target comprising of 80-98 at% 70Sb-(5-15)In-(15-25)Sn alloy and 2-20 at% 80ZnS-20SiO₂ ceramic to achieve smaller mark formation in high density optical recording
(f) A polycarbonate cover layer of 80-120 micron thickness

8. A write-once-read-many times (WORM) optical recording media comprising a phase-change material, dielectric layer, reflectance layer for high density storage using blue laser of 405 nm wavelength

9. A process for preparing a write-once-read-many times (WORM) optical recording media **characterized by** the step of changing the atomic structure of antimony-tin-indium alloy, doped with Zinc, Sulphur, Silicon, Oxygen recording phase- change material from amorphous state to crystalline state using blue laser of 405 nm wavelength

10. A process as claimed in claim 7 wherein said phase-change material in combination with dielectric layer, and reflectance layer is used to meet the requirements of high density recording up to a recording speed of 10 meter per second.
